# EUROPEAN PATENT APPLICATION

(11) **EP 2 378 220 A2**
(43) Date of publication of application: **19.10.2011**
(21) Application number: 11151358.6
(22) Date of filing: 19.01.2011
(51) Int. Cl.: F24J 2/52

(54) **Corrugated plate structure having solar panel**

(30) Priority: 14.04.2010 TW 099111691; 22.10.2010 TW 099136215
(71) Applicant: a2peak power Co., Ltd., Tao-Yuan, Chinese Taipei (CN)
(72) Inventor: Lin, Ching-Chieh, Longtan Township (TW); Chen, Tzu-Hsiu, Zhudong Township (TW); Lin, Mei-Hsiu, Zhunan Township (TW); Chou, Chun-Hsien, Qingshui Township (TW)
(74) Representative: Viering, Jentschura & Partner

(57) **Abstract**

A corrugated plate structure having a solar panel is used for mounting at least one solar panel. The corrugated plate structure has at least one corrugated plate, the corrugated plate has a bottom plate portion and two side plate portions bent from two opposite sides of the bottom plate portion, so that an accommodation space is formed between the two side plate portions. The solar panel is assembled in the accommodation space along the two side plate portions, so as to mount the solar panel on the corrugated plate. Thereby, the construction operation of mounting the solar panel is simplified, the bearing load of the building is reduced, the solar panel is easily dismounted for replacement, and meanwhile the integrity of the appearance of the building is maintained.

## Description

### BACKGROUND OF THE INVENTION

### Field of the Invention

The present invention claims the benefit of domestic priority to Application No. 099111691, relates to a corrugated plate structure, and more particularly to a corrugated plate structure having a solar panel.

### Related Art

Solar cells are used for power generation by directly converting light energy into electric energy for output. Currently, common solar power generation and solar water heaters are the most typical examples of solar energy applications for environmental protection in modern life. The power generation principle of solar cells lies in that, sunlight is irradiated on a solar panel, so that the solar panel absorbs sunlight having a wavelength of, for example, 200 to 2400 nm, and then p-type semiconductors and n-type semiconductors in the solar panel generate electrons (negative) and holes (positive), and meanwhile the electrons are separated from the holes to form a voltage drop, which is then transmitted to a load through a lead.

In order to effectively collect light energy, the solar panel is generally designed to have a large area. However, in order to prevent the solar panel from being damaged or broken due to the weight thereof or an external force (such as a wind force), a support bracket is generally used for installing the solar panel. However, currently available support brackets are mostly made of an aluminum extrusion material or an angle steel material, so the cost and the selling price are excessively high. Furthermore, during transportation, the support brackets have an excessively heavy weight and an excessively huge volume, and occupy a large space. The support brackets are not easy to carry, especially for construction operation of installation on the top floor. Besides the difficulty in construction and transportation, the bearing load of the roof of the building is also increased, and the overall appearance of the building is seriously affected when the solar panel is mounted on the roof through the support bracket.

Furthermore, the commercially available support brackets have a complex overall structure and an excessively large number of component combinations, some combined structures can only be assembled by electric welding, and the structure can not be changed after assembly, so that the solar panel cannot be dismounted for replacement. Therefore, how to eliminate the above defects is the technical problem to be solved by the inventor.

### SUMMARY OF THE INVENTION

Accordingly, the present invention is a corrugated plate structure having a solar panel, which solves the problem that the support bracket has an excessively heavy weight and an excessively large number of components, making it difficult for transportation and construction in the prior art.

A corrugated plate structure having a solar panel according to an embodiment of the present invention comprises at least one corrugated plate and at least one solar panel. The corrugated plate has a bottom plate portion and two side plate portions, the two side plate portions are bent from two opposite sides of the bottom plate portion, and an accommodation space is formed between the two side plate portions and the bottom plate portion. The solar panel is accommodated in the accommodation space, and the solar panel is fixedly connected with the bottom plate portion.

A corrugated plate structure having a solar panel according to another embodiment of the present invention comprises at least one corrugated plate and at least one solar panel. The corrugated plate has a bottom plate portion and two side plate portions, the two side plate portions are bent from two opposite sides of the bottom plate portion, and an accommodation space is formed between the two side plate portions and the bottom plate portion. The solar panel is accommodated in the accommodation space, and the solar panel is fixedly connected with the two side plate portions.

A corrugated plate structure having a solar panel according to still another embodiment of the present invention comprises at least one corrugated plate and at least one solar panel. The corrugated plate has a bottom plate portion, two side plate portions, and two top plate portions, the two side plate portions are bent from two opposite sides of the bottom plate portion, and the two top plate portions are respectively bent from an end of the two side plate portions. The solar panel is disposed on the two top plate portions.

According to the corrugated plate structure having the solar panel of the present invention, the solar panel can be directly mounted on the corrugated plate to serve as the main appearance of a roof of a building, while maintaining the original appearance design of the building, without impairing the appearance of the building. Furthermore, the problem that a support bracket structure is required for installing the solar panel in the prior art is solved, so that the construction operation of the solar panel is simplified, and the bearing load of the building can also be reduced.

### BRIEF DESCRIPTION OF THE DRAWINGS

The present invention will become more fully understood from the detailed description given herein below for illustration only, and thus are not limitative of the present invention, and wherein:
FIG. 1 is a schematic exploded view of a corrugated plate structure having a solar panel according to a first embodiment of the present invention;
FIG. 2 is a schematic assembly view of the corrugated plate structure having the solar panel according to the first embodiment of the present invention;
FIG. 3 is a schematic sectional view of the corrugated plate structure having the solar panel according to the first embodiment of the present invention;
FIG. 4 is a schematic exploded view of a corrugated plate structure having a solar panel according to a second embodiment of the present invention;
FIG. 5 is a schematic assembly view of the corrugated plate structure having the solar panel according to the second embodiment of the present invention;
FIG. 6 is a schematic exploded view of a corrugated plate structure having a solar panel according to a third embodiment of the present invention;
FIG. 7 is a schematic sectional view of the corrugated plate structure having the solar panel according to the third embodiment of the present invention;
FIG. 8 is a schematic exploded view of a corrugated plate structure having a solar panel according to a fourth embodiment of the present invention;
FIG. 9 is a schematic sectional view of the corrugated plate structure having the solar panel according to the fourth embodiment of the present invention;
FIG. 10 is a schematic exploded view of a corrugated plate structure having a solar panel according to a fifth embodiment of the present invention;
FIG. 11 is a schematic assembly view of the corrugated plate structure having the solar panel according to the fifth embodiment of the present invention;
FIG. 12 is a schematic sectional view of the corrugated plate structure having the solar panel according to the fifth embodiment of the present invention;
FIG. 13 is a schematic exploded view of a corrugated plate structure having a solar panel according to a sixth embodiment of the present invention;
FIG. 14 is a schematic assembly view of the corrugated plate structure having the solar panel according to the sixth embodiment of the present invention; and
FIG. 15 is a schematic sectional view of the corrugated plate structure having the solar panel according to the sixth embodiment of the present invention.

### DETAILED DESCRIPTION OF THE INVENTION

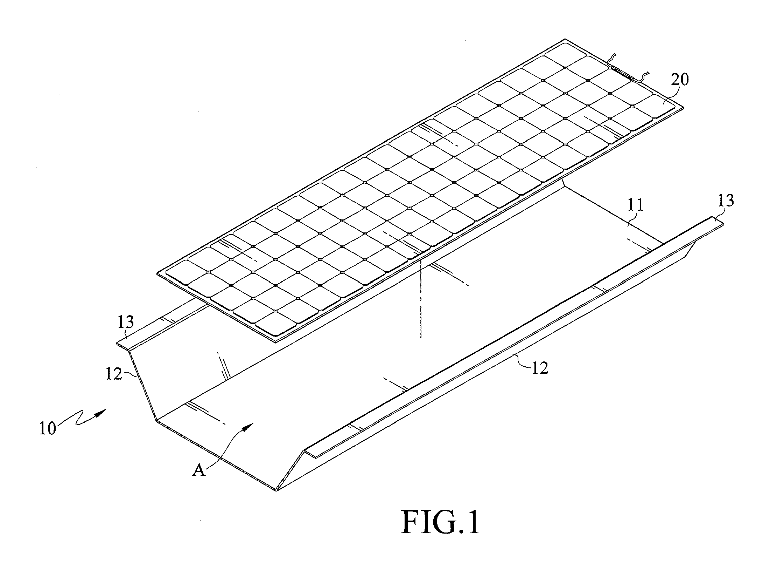

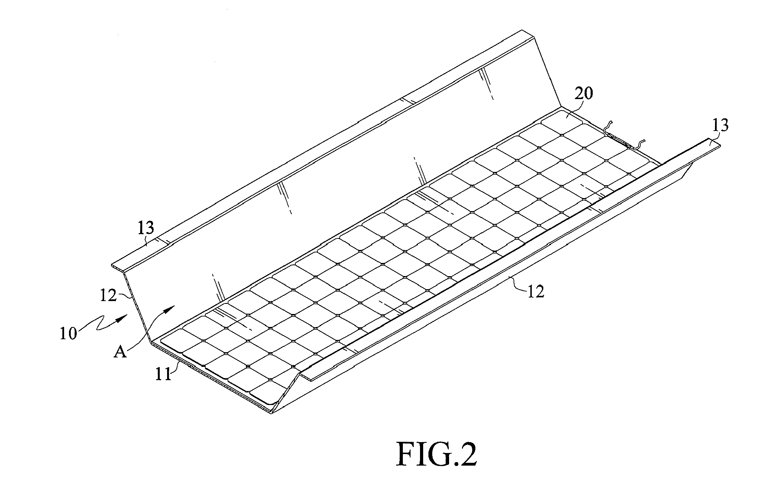

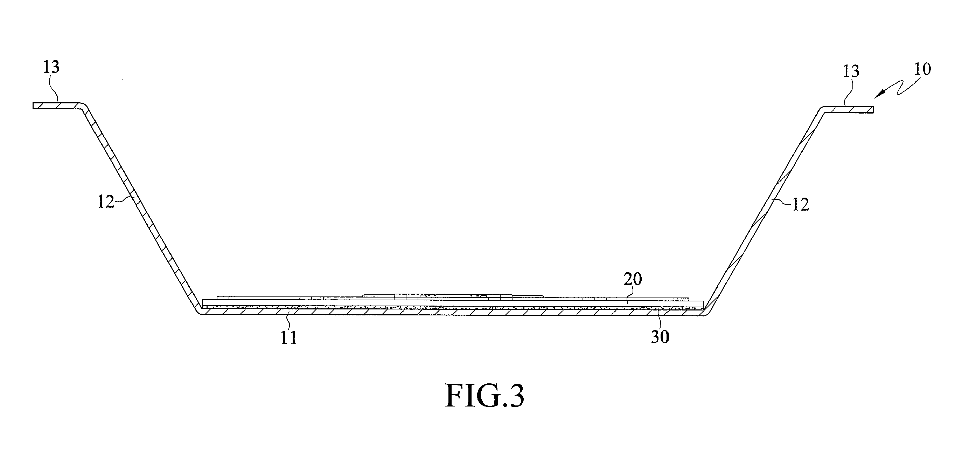

Referring to FIGs. 1 to 3, FIG. 1 is a schematic exploded view of a corrugated plate structure having a solar panel according to a first embodiment of the present invention; FIG. 2 is a schematic assembly view of the corrugated plate structure having the solar panel according to the first embodiment of the present invention; and FIG. 3 is a schematic sectional view of the corrugated plate structure having the solar panel according to the first embodiment of the present invention.

A corrugated plate structure having a solar panel according to an embodiment of the present invention comprises at least one corrugated plate 10 and at least one solar panel 20. As shown in FIG. 1, the corrugated plate 10 may be made of a material such as a metallic material, fiberglass reinforced resin or polyvinyl chloride, but the present invention is not limited thereto. In this embodiment, by mechanical processing, the corrugated plate 10 is formed with a bottom plate portion 11 and two side plate portions 12, and the two side plate portions 12 are bent from two opposite sides of the bottom plate portion 11 respectively, so that an angle is formed between each of the two side plate portions 12 and the bottom plate portion 11 respectively, and an accommodation space A is formed between the two side plate portions 12.

When the solar panel 20 is assembled to the corrugated plate 10, the solar panel 20 is placed in the accommodation space A of the corrugated plate 10, an adhesive material 30 (as shown in FIG. 3) is disposed on a bottom surface of the solar panel 20, and the solar panel 20 is adhered onto the bottom plate portion 11 with the adhesive material 30. In this way, the solar panel 20 can be fixedly connected with the bottom plate portion 11 of the corrugated plate 10.

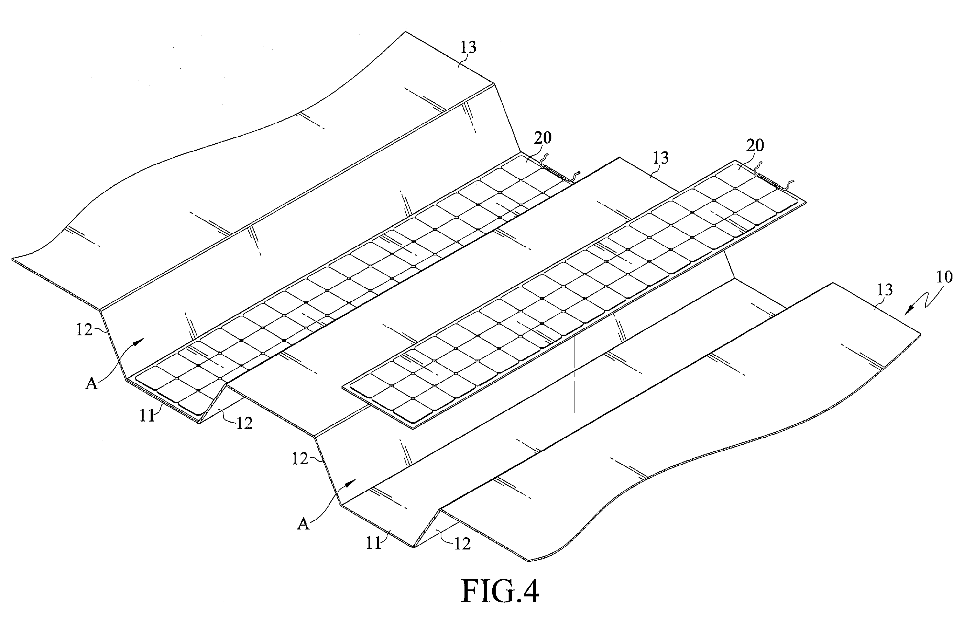

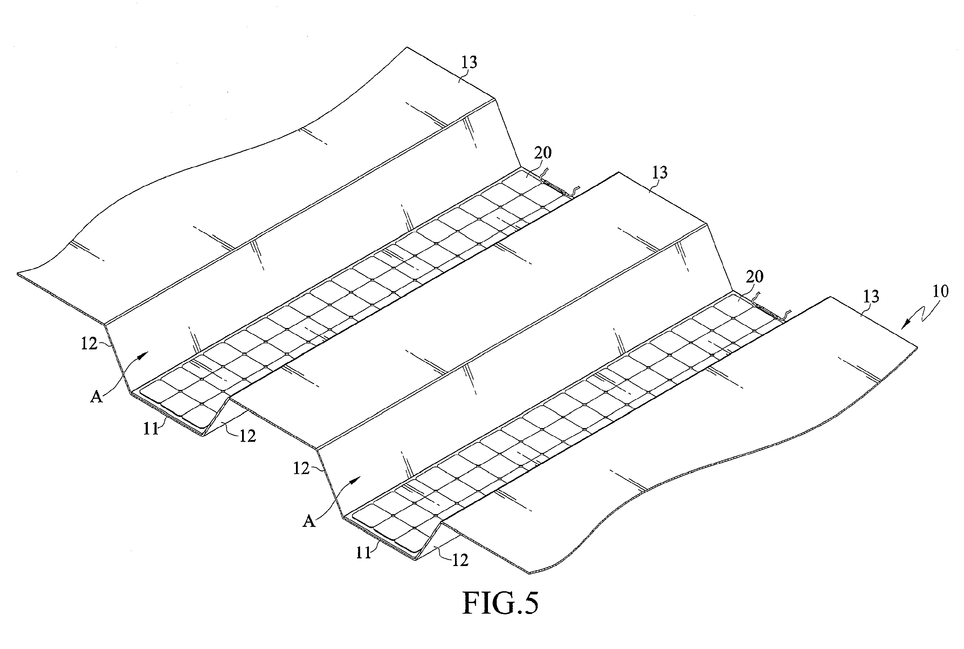

In this embodiment, the corrugated plate 10 is not limited to only be formed with one bottom plate portion 11, and a plurality of bottom plate portions 11 may also be formed on the corrugated plate 10 at the same time. FIGs. 4 and 5 are a schematic exploded view and a schematic assembly view of a corrugated plate structure having a solar panel according to a second embodiment of the present invention. As shown in FIGs. 4 and 5, ends of the side plate portions 12 at two opposite sides of each bottom plate portion 11 are respectively connected with a top plate portion 13. In this way, a plurality of solar panels 20 can be fixed on a plurality of bottom plate portions 11 of one corrugated plate 10 at the same time.

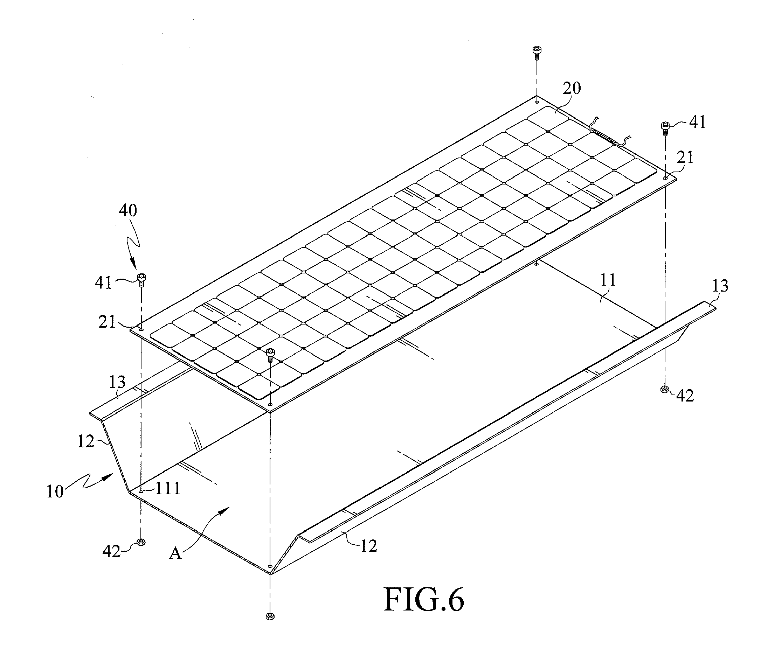

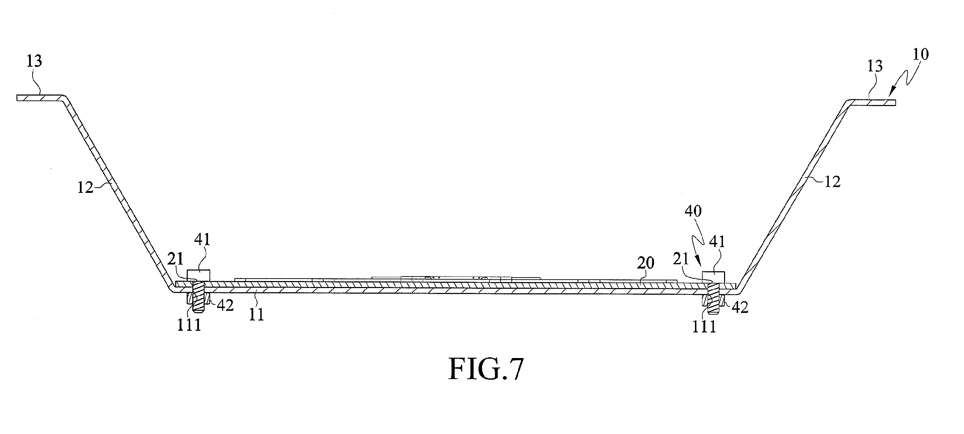

Referring to schematic views in FIGs. 6 to 7, FIG. 6 is a schematic exploded view of a corrugated plate structure having a solar panel according to a third embodiment of the present invention; and FIG. 7 is a schematic sectional view of the corrugated plate structure having the solar panel according to the third embodiment of the present invention. The specific implementation of this embodiment is approximately the same as the foregoing embodiments, and only the difference there-between is illustrated hereinafter.

In this embodiment, the solar panel 20 may be fixed on the corrugated plate 10 with at least one fixing element 40, and the fixing element 40 may be a bolt 41 and a nut 42, but the present invention is not limited thereto. Furthermore, at least one first perforation 111 is opened on the bottom plate portion 11 of the corrugated plate 10, and likewise, at least one second perforation 21 is opened on the solar panel 20, so that the position of the first perforation 111 of the bottom plate portion 11 is corresponding to the position of the second perforation 21 of the solar panel 20. Afterwards, the bolt 41 is passed through the first perforation 111 and the second perforation 21, and then locked into the nut 42, so that the solar panel 20 is fixedly connected with the bottom plate portion 11 of the corrugated plate 10.

Definitely, the technical means of this embodiment can also be applied to the corrugated plate 10 according to the embodiment as shown in FIGs. 4 to 5, and a plurality of solar panels 20 is fixed on a plurality of bottom plate portions 11 of the same corrugated plate 10 respectively with a plurality of fixing elements 40.

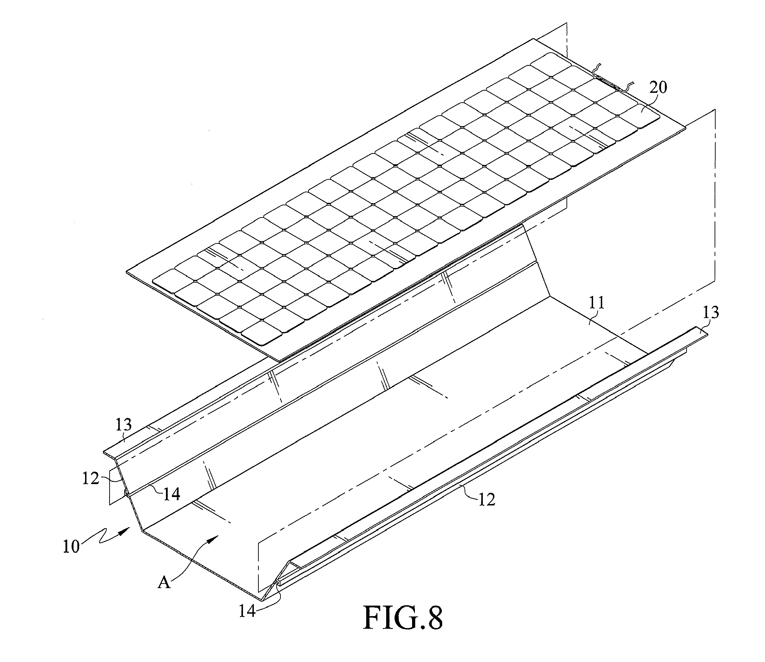

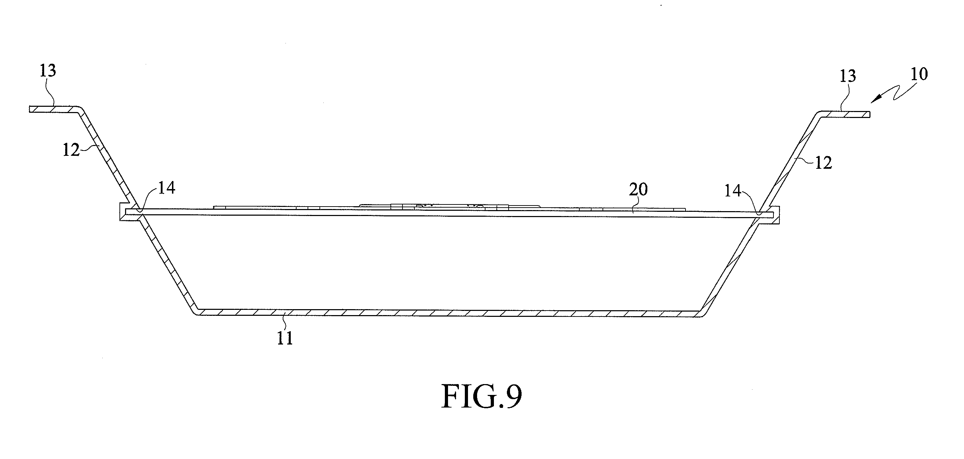

Referring to schematic views in FIGs. 8 to 9, FIG. 8 is a schematic exploded view of a corrugated plate structure having a solar panel according to a fourth embodiment of the present invention; and FIG. 9 is a schematic sectional view of the corrugated plate structure having the solar panel according to the fourth embodiment of the present invention. The specific implementation of this embodiment is approximately the same as the foregoing embodiments, and only the difference there-between is illustrated hereinafter.

In this embodiment, chute portions 14 corresponding to each other are disposed on the two side plate portions 12 of the corrugated plate 10 respectively. A chute portion 14 is formed along a surface of the side plate portion 12 mainly by mechanical processing, so that the chute portion 14 is opened on the surface of the side plate portion 12. During assembly, two opposite side edges of the solar panel 20 are respectively embedded in the corresponding chute portions 14, and then the solar panel 20 is pushed into the accommodation space A. With design of the chute portions 14, the solar panel 20 can be fixedly connected with the side plate portions 12 of the corrugated plate 10.

Definitely, the technical means of this embodiment can also be applied to the corrugated plate 10 according to the embodiment as shown in FIGs. 4 to 5, and a plurality of solar panels 20 is respectively embedded in the corresponding chute portions 14, so that the plurality of solar panels 20 is fixed on a plurality of side plate portions 12 of the same corrugated plate 10 respectively.

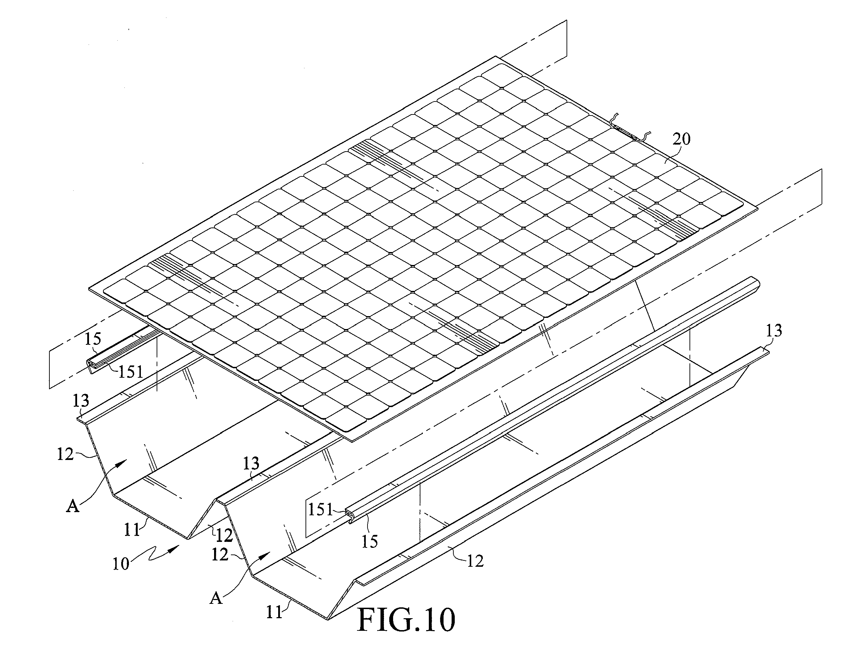

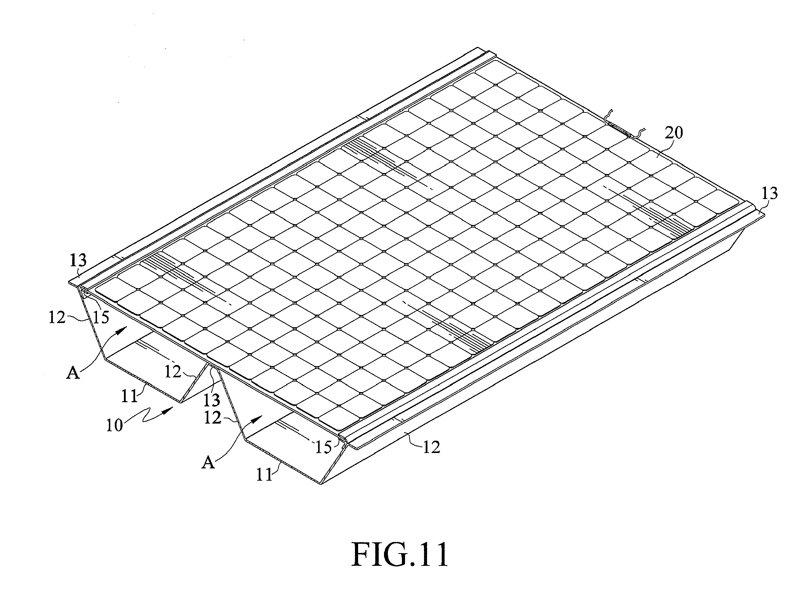

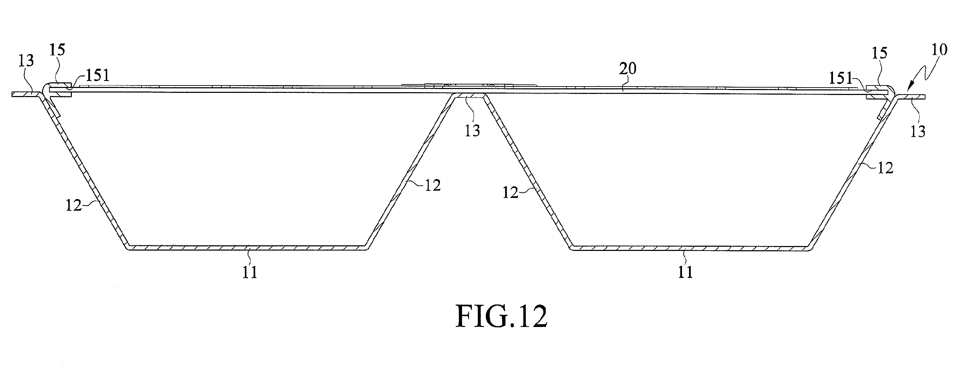

Referring to schematic views in FIGs. 10 to 12, FIG. 10 is a schematic exploded view of a corrugated plate structure having a solar panel according to a fifth embodiment of the present invention; FIG. 11 is a schematic assembly view of the corrugated plate structure having the solar panel according to the fifth embodiment of the present invention; and FIG. 12 is a schematic sectional view of the corrugated plate structure having the solar panel according to the fifth embodiment of the present invention.

In this embodiment, chute members 15 corresponding to each other are disposed on two corresponding side plate portions 12 of the corrugated plate 10 respectively. The chute member 15 is fixed on a surface of the side plate portion 12 in a connection manner (such as welding, adhesion, and buckling). As shown in FIGs. 11 and 12, the two chute members 15 are fixed on top ends of the side plate portions 12 respectively, but the present invention is not limited thereto. Each chute member 15 respectively has a chute 151. When the solar panel 20 is assembled, two opposite side edges of the solar panel 20 are respectively embedded in the corresponding chutes 151, and then the solar panel 20 is pushed towards the corrugated plate 10. It should be noted that, in this embodiment, the solar panel 20 may span a plurality of bottom plate portions 11 at the same time, that is, traverse a plurality of top plate portions 13 (as shown in FIG. 12), so that the solar panel 20 with a large area is fixedly connected with the side plate portions 12 of the corrugated plate 10.

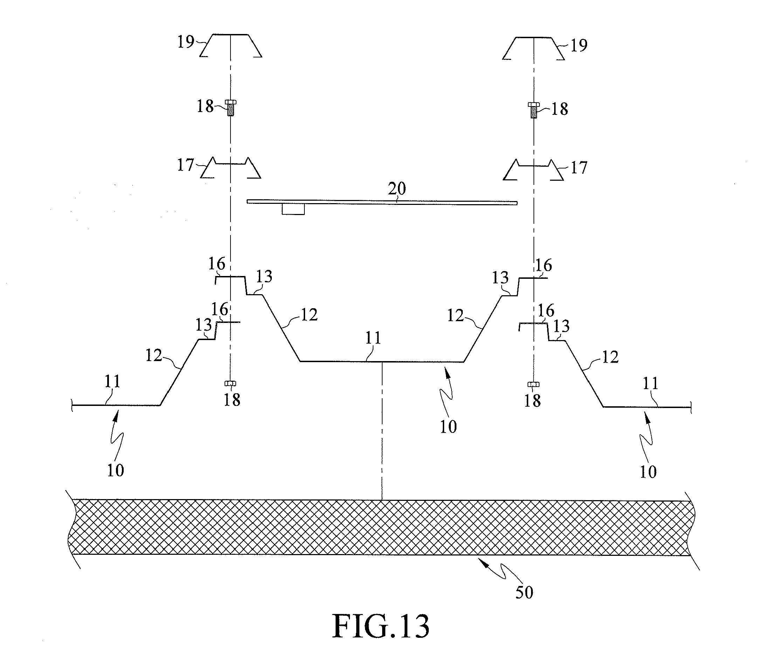

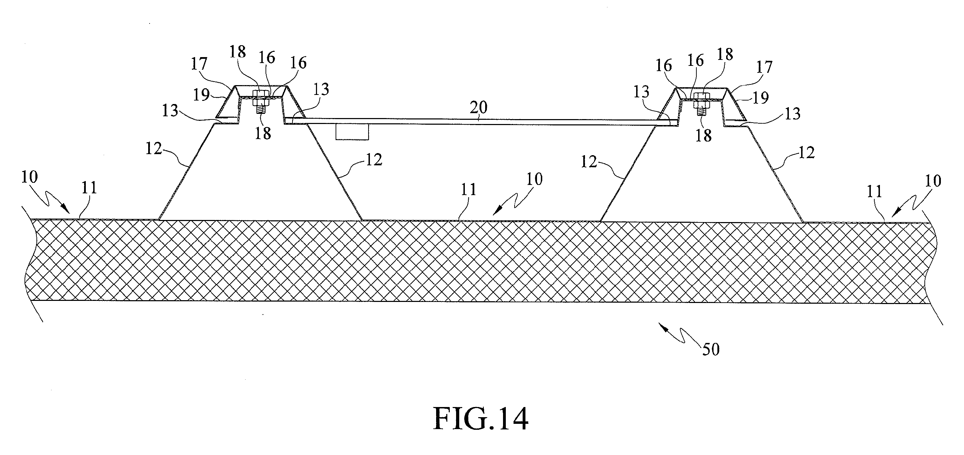

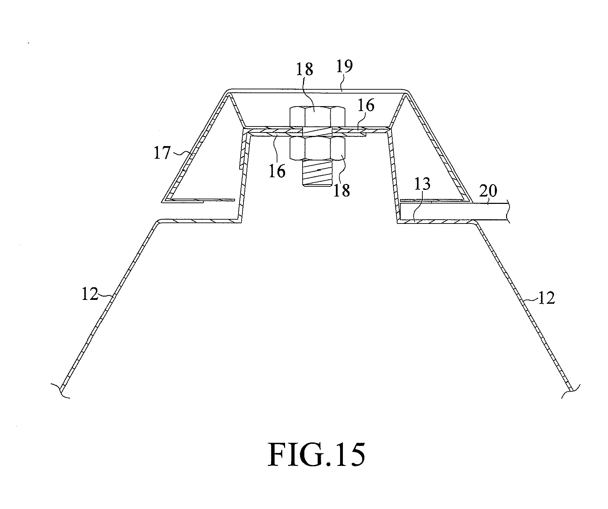

Referring to schematic views in FIGs. 13 to 15, FIG. 13 is a schematic exploded view of a corrugated plate structure having a solar panel according to a sixth embodiment of the present invention; FIG. 14 is a schematic assembly view of the corrugated plate structure having the solar panel according to the sixth embodiment of the present invention; and FIG. 15 is a schematic sectional view of the corrugated plate structure having the solar panel according to the sixth embodiment of the present invention.

In this embodiment, mainly, a platen portion 16 is bent from an end of each of the two top plate portions 13 of the corrugated plate 10 respectively by mechanical processing. During assembly, firstly, a plurality of corrugated plates 10 is mounted on a roof fixing beam 50, and the corrugated plates 10 are assembled such that two platen portions 16 overlap each other. Afterwards, at least one solar panel 20 is respectively placed on the top plate portions 13 of each corrugated plate 10, and then a pressing member 17 is assembled on the two overlapping platen portions 16, so that the pressing member 17 presses against a surface of the solar panel 20, so as to prevent the solar panel 20 from disengaging from the top plate portions 13, thereby fixedly connecting the solar panel 20 with the top plate portions 13 of the corrugated plate 10.

Moreover, at least one locking element 18 may be passed through the two overlapping platen portions 16 and the pressing member 17, so that the two overlapping platen portions 16 and the pressing member 17 are locked on the roof fixing beam 50, so as to prevent the corrugated plate 10 from disengaging from the roof fixing beam 50. Furthermore, a cover 19 may be assembled on a surface of the pressing member 17, so as to shield the locking element 18. However, the above description that the locking element is used to lock the pressing member 17 and the two overlapping platen portions 16 so that the pressing member 17 presses against the solar panel 20 on the surface of the top plate portion 13 is merely illustration of a preferable embodiment, but is not intended to limit the present invention. The adhesive material 30 may also be disposed at the bottom surface of the solar panel 20 as described in the first embodiment, so that the solar panel 20 is adhered onto the surface of the top plate portion 13 through the adhesive material 30.

Definitely, the technical means of this embodiment can also be applied to the corrugated plate 10 according to the embodiment as shown in FIGs. 4 to 5, a plurality of solar panels 20 is respectively disposed on the corresponding top plate portions 13, and the pressing member 17 is pressed against the solar panels 20, so that the plurality of solar panels 20 is fixed on a plurality of top plate portions 13 of the same corrugated plate 10 respectively.

According to the corrugated plate structure having the solar panel of the present invention, the solar panel can be directly mounted on the corrugated plate, so that the construction of the solar panel and transportation are simplified, and the bearing load of the building can also be reduced, while maintaining the original appearance design of the building, without impairing the appearance of the building.

## Claims

1. A corrugated plate structure having a solar panel, comprising:
at least one corrugated plate, comprising:
a bottom plate portion; and
two side plate portions, bent from two opposite sides of the bottom plate portion, wherein an accommodation space is formed between the two side plate portions and the bottom plate portion; and
at least one solar panel, accommodated in the accommodation space, wherein the solar panel is fixedly connected with the bottom plate portion.

2. The corrugated plate structure having the solar panel according to claim 1, further comprising an adhesive material, wherein the adhesive material is disposed on a surface of the solar panel, and the solar panel is fixed on the bottom plate portion with the adhesive material.

3. The corrugated plate structure having the solar panel according to claim 1, further comprising at least one fixing element, wherein at least one first perforation is opened on the bottom plate portion of the corrugated plate, at least one second perforation is opened on the solar panel, and the fixing element passes through the first perforation and the second perforation correspondingly, so that the solar panel is fixed on the bottom plate portion.

4. The corrugated plate structure having the solar panel according to claim 1, further comprising a plurality of bottom plate portions and a plurality of solar panels, wherein the bottom plate portions are spaced and arranged on the corrugated plate, and the solar panels are fixedly connected with the bottom plate portions respectively.

5. A corrugated plate structure having a solar panel, comprising:
at least one corrugated plate, comprising:
a bottom plate portion; and
two side plate portions, bent from two opposite sides of the bottom plate portion, wherein an accommodation space is formed between the two side plate portions and the bottom plate portion; and
at least one solar panel, accommodated in the accommodation space, wherein two opposite sides of the solar panel are fixedly connected with the two side plate portions.

6. The corrugated plate structure having the solar panel according to claim 5, further comprising two chute portions, opened on surfaces of the two side plate portions and corresponding to each other, wherein two opposite side edges of the solar panel are embedded in the two chute portions respectively, and the solar panel is accommodated in the accommodation space, so that the solar panel is fixed on the two side plate portions.

7. The corrugated plate structure having the solar panel according to claim 5, further comprising two chute members, respectively having a chute, wherein the two chute members are fixed on the two side plate portions respectively, the two chutes of the two chute members are corresponding to each other, two opposite side edges of the solar panel are embedded in the two chutes respectively, and the solar panel is accommodated in the accommodation space, so that the solar panel is fixed on the two side plate portions.

8. A corrugated plate structure having a solar panel, comprising:
at least one corrugated plate, comprising:
a bottom plate portion;
two side plate portions, bent from two opposite sides of the bottom plate portion;
two top plate portions, respectively bent from an end of the two side plate portions; and
at least one solar panel, disposed on the two top plate portions.

9. The corrugated plate structure having the solar panel according to claim 8, further comprising a plurality of corrugated plates, wherein each of the corrugated plates respectively has a platen portion bent from an end of the top plate portion, and the corrugated plates overlap each other at the respective platen portions thereof.

10. The corrugated plate structure having the solar panel according to claim 9, further comprising at least one pressing member, assembled on the two overlapping platen portions, wherein the pressing member presses against a surface of the solar panel, so that the solar panel is fixed on the two top plate portions.
